# EUROPÄISCHE PATENTSCHRIFT

(11) **EP 1 600 335 B1**
(45) Veröffentlichungstag und Bekanntmachung des Hinweises auf die Patenterteilung: **07.01.2015**
(21) Anmeldenummer: 05011056.8
(22) Anmeldetag: 21.05.2005
(51) Int. Cl.: B60R 19/48, B60R 19/56

(54) **Stossfängereinheit für einen Frontbereich eines Kraftfahrzeuges**
Bumper unit for the front-end of a vehicle
Unité d'absorption des chocs pour la partie avant d'une véhicule

(30) Priorität: 28.05.2004 DE 102004026280
(43) Veröffentlichungstag der Anmeldung: 30.11.2005
(73) Patentinhaber: MAN Truck & Bus AG, 80995 München (DE)
(72) Erfinder: Kneifel, Eberhard, Dipl.-Ing., 89250 Senden (DE); Häberle, Hartmut, Dipl.-Ing.(FH), 81247 München (DE); Rahlf, Gerhard, Dipl.-Ing., 85757 Karlsfeld (DE)

(56) Entgegenhaltungen:
- WO-A-02/070327
- DE-A1- 19 643 049
- US-B1- 6 450 276

## Beschreibung

### Technisches Gebiet:

Die Erfindung betrifft eine Stoßfängereinheit für einen Frontbereich eines Kraftfahrzeugs, die über einen an einem Rahmen und/oder an einem Rahmenanbauteil des Kraftfahrzeugs befestigbaren Stoßfängerträger verfügt, der zumindest ein Unterfahrschutzelement sowie wenigstens eine Stoßfängerblende aufweist.

### Stand der Technik:

Um zu vermeiden, dass bei einem Aufprall eines Personenkraftwagens auf ein Nutzfahrzeug der Pkw unter das Nutzfahrzeug im vorderen Fahrzeugbereich geschoben wird, sind Unterfahrschutzeinrichtungen bekannt, die im Bereich des Stoßfängers derart angeordnet sind, dass die bei einem Zusammenprall auftretenden Kräfte in den Fahrzeugrahmen weitergeleitet werden, ohne dass der Pkw unter das Nutzfahrzeug rutscht. Mit der vorgenannten, seit dem August 2003 für Lastkraftwagen gesetzlich vorgeschrieben vorderen Unterfahrschutzeinrichtung soll zum einen das Verletzungsrisiko eines Pkw-Führers verringert und zum anderen auch nach einem Frontaufprall eine sichere Führung der Vorderachse des Lastkraftwagens sicher gestellt werden. Unter anderem ist eine maximale Anordnungshöhe, 400 mm über der Fahrbahn, des Unterfahrschutzes vorgeschrieben.

Die Anbringung des Unterfahrschutzes erfolgt bei den bekannten Systemen entweder unmittelbar hinter oder unter dem Stoßfänger. Da der Stoßfänger jedoch üblicherweise als ein- oder mehrteiliges Kunststoffbauteil oder auch als Stahlblechbauteil ausgeführt ist, in das eine Vielzahl funktioneller Anbauteile, wie etwa Scheinwerfer, Blinker, Scheinwerferreinigungsanlage, Wasserbehälter, Sensoren usw., integriert sind, führt das Vorsehen eines Unterfahrschutzes zu erheblichen Platzproblemen bzw. Kollisionen mit Anbauteilen. Darüber hinaus muss bei einem Unterfahrschutz, der unterhalb des Stoßfängers befestigt wird, aus optischen Gründen eine zusätzliche Blende als Verkleidung vorgesehen werden.

Eine Unterfahrschutzeinrichtung, die auch nach einem Frontaufprall immer noch eine gute Führung der Vorderachse gewährleistet ist aus der DE 197 00 661 A1 bekannt. In dieser Druckschrift wird ein Unterfahrschutz für ein Nutzfahrzeug beschrieben, der ein Stoßauffangelement aufweist, das in Höhe von stoßaufnehmenden Bauteilen eines Personenkraftwagens wagens angeordnet ist. Das Stoßauffangelement ist über ein Kraftweiterleitungselement, an dem selbst ein Element zur Rad- bzw. Achsführung abgestützt ist, am Fahrzeugrahmen angebunden. Der Unterfahrschutz zeichnet sich insbesondere dadurch aus, dass das Kraftweiterleitungselement eine in Vorwärtsfahrtrichtung des Nutzfahrzeugs vor dessen Vorderachse angeordnete Konsole ist, die in einem der Vorderachse abgewandten Bereich stoßabsorbierend und in einem der Vorderachse zugewandten Bereich steif ausgebildet ist. Das Element zur Rad- bzw. Achsführung ist hierbei an dem steifen Bereich der Konsole angelenkt.

Ferner ist aus der DE 196 43 049 A1 ein als Unterfahrschutz ausgebildeter Stoßfänger für ein Kraftfahrzeug bekannt, der am Rahmenfrontend zu befestigen ist und bei dem der Tragkörper des Stoßfängers ein aus zwei U-förmig profilierten Halbschalen aufgebautes Hohlprofit ist. In jeder Halbschale sind Verstärkungselemente vorgesehen, die in der neutralen Faser mit seitlichen Einschnitten versehen sind und die im Bereich der Befestigungsstellen zusätzliche Verstärkungswinkelstreifen aufweisen. Die Halbschalen und die Verstärkungselemente bestehen aus einem Stahlblech, wobei die Verstärkungselemente sicher stellen sollen, dass sich eine allmähliche Zunahme des Widerstandsmomentes zu den Befestigungsstellen hin ergibt und sich so bei einer Belastung eine möglichst gleichmäßige Biegemomentverteilung im Unterfahrschutz einstellt.

Schließlich ist aus der WO 02/070327 A1 ein Nutzfahrzeug mit einem Unterfahrschutz bekannt. Die darin beschriebene Frontanordnung eines Lastkraftwagens wirkt mit einem vorderen Abschnitt eines im Fahrzeug enthaltenen längs verlaufenden Rahmens zusammen. Der Unterfahrschutz weist seinerseits eine Trägerstruktur mit mindestens einer ersten Befestigungseinrichtung auf, die mit mindestens einer zweiten am vorderen Rahmen ausgebildeten Befestigungseinrichtung zusammenwirkt. Die Erfindung ist dazu bestimmt die Montage der Frontendanordnung zu erleichtern. Die Erfindung weist jedoch nicht die wünschenswerte mechanische Festigkeit bei Krafteinwirkungen in den Übergangsbereichen von der Frontseite des Nutzfahrzeuges zur rechten bzw. linken Fahrzeugseite auf.

Ferner ist zum Stand der Technik hinzuweisen auf DE 103 00 393 B3. Auch diese Druckschrift offenbart jedoch keine Stoßfängereinheit mit einer rahmenförmigen Stützkonstruktion. Darüber hinaus ermöglicht diese Stoßfängereinheit nicht den Einbau von Beleuchtungseinheiten.

Als Problem bei den aus dem Stand der Technik bekannten Lösungen erweist sich vor allem der Platzbedarf und das nicht unerhebliche Mehrgewicht der zusätzlich vorzusehenden Unterfahrschutzeinrichtung. Wie bereits eingangs erwähnt worden ist, befinden sich gerade im Frontbereich eines Kraftfahrzeugs, insbesondere eines Nutzfahrzeugs, eine Vielzahl funktioneller Anbauteile, deren Platzbedarf bei Anordnung mit dem Unterfahrschutz zu berücksichtigen ist und deren Montage auf Grund des Unterfahrschutzes zumindest erheblich erschwert ist.

Die Aufgabe der vorliegenden Erfindung besteht daher darin, ausgehend von dem bekannten Stand der Technik eine Unterfahrschutzeinrichtung für ein Kraftfahrzeug anzugeben, die mit verhältnismäßig einfachen Mitteln im Frontbereich eines Kraftfahrzeugs integrierbar ist. Insbesondere soll neben einer Gewichtsreduzierung des Gesamtsystems Stoßfänger/Unterfahrschutz sowohl eine zuverlässige Funktion des Unterfahrschutzes und eine sichere Aufnahme der bei einem Frontaufprall auftretenden Kräfte gewährleistet werden, als auch eine einfache Montage und Wartung der im Frontbereich eines Fahrzeugs vorgesehenen funktionellen Anbauteile möglich sein.

Die Lösung der vorgenannten Aufgabe wird mit einer Vorrichtung gemäß des Patentanspruchs 1 erzielt. Vorteilhafte Weiterbildungen der Erfindung sind der Beschreibung sowie dem Ausführungsbeispiel unter Bezugnahme auf die Figuren zu entnehmen.

Erfindungsgemäß ist eine Stoßfängereinheit für einen Frontbereich eines Kraftfahrzeugs, die über einen an einem Rahmen und/oder an einem Rahmenanbauteil des Kraftfahrzeugs befestigbaren Stoßfängerträger verfügt, der zumindest ein Unterfahrschutzelement sowie wenigstens eine Stoßfängerblende aufweist, derart weitergebildet, dass der Stoßfängerträger als im weitesten Sinne rahmenförmige Stützkonstruktion ausgebildet ist, an der wenigstens ein Anbauteil und/oder ein Funktionselement des Kraftfahrzeugs befestigbar ist, und dass das zumindest eine Unterfahrschutzelement als im Wesentlichen parallel zur Fahrbahn und quer zur Fahrtrichtung des Kraftfahrzeugs angeordnete Verstrebung der rahmenförmigen Stützkonstruktion ausgeführt ist.

Bei der erfindungsgemäßen Stoßfängereinheit wird somit sicher gestellt, dass die aus Sicherheitsgründen vorzusehende bzw. gesetzlich vorgeschriebene Unterfahrschutzeinrichtung in Form einer versteifenden Ergänzung in eine Stützkonstruktion integriert ist, die neben dem Unterfahrschutz auch weitere Anbauteile und/oder Funktionselemente des Fahrzeugs aufnimmt. Auf diese Weise wird ein kompaktes Frontmodul geschaffen, das eine sichere Funktion als auch eine verhältnismäßig einfache Handhabung, vor allem in Bezug auf Montage- und Wartungsarbeiten, gewährleistet. Bei der Stützkonstruktion handelt es sich vorzugsweise um eine Stahlkonstruktion. Es ist allerdings ebenfalls denkbar, die Stützkonstruktion in Leichtbauweise, bspw. mit einem Kunststoff oder einem Leichtmetall, oder als Verbundelement, das sowohl einen Kunststoff als auch wenigstens ein Metall aufweist, auszuführen.

Bei den Anbauteilen, die an bzw. in der Stützkonstruktion befestigbar sind, kann es sich sowohl um zum Fahrerhaus gehörende Befestigungselemente, wie bspw. die Fahrerhauslagerung, als auch um Elemente zur Befestigung von Achs- und/oder Lenkungselementen handeln. Demgegenüber sind unter Funktionselementen Bauteile zu verstehen, die nicht ausschließlich zur Aufnahme von Kräften vorgesehen sind, sondern die eine bestimmte Funktion, die für den Betrieb oder die Stillstandszeiten des Kraftfahrzeugs von Bedeutung sind, realisieren. Bei derartigen Funktionselementen handelt es sich vorzugsweise um Scheinwerfer, Zusatzscheinwerfer, Blinker, Scheinwerferreinigungsanlage, Wasserbehälter, Fangmaul, Hupe, Auftritte zur Scheibenreinigung, Einstiege für den Fahrer sowie Sensorsysteme. Als Sensorsystem kommt je nach Ausstattung des Kraftfahrzeugs bspw. sowohl ein Abstandskontroll- als auch ein Fahrspurführungssystem in Frage. Darüber hinaus ist es auch denkbar, die Stützkonstruktion derart auszuführen, dass die Klimaanlage, der Fahrzeugkühler oder zumindest Komponenten der vorgenannten Aggregate an der Stützkonstruktion befestigbar sind. Als Verbindungstechniken zur Befestigung der Anbauteile und/oder der Funktionselemente können einerseits zerstörungsfrei andererseits aber auch zerstörend, wie etwa Schweiß- oder Klebeverbindungen, zu lösende Verbindungen eingesetzt werden.

In einer besonderen Ausführungsform des erfindungsgemäßen Stoßfängers stellt die Stoßfängerblende des an dem Rahmen und/oder an dem Rahmenanbauteil des Kraftfahrzeugs befestigten Stoßfängerträgers eine von außen sichtbare Fläche der Stützkonstruktion dar. In diesem Fall ist die Stoßfängerblende eine Sichtfläche des Stoßfängers, die vorteilhafter Weise aus dem gleichen Material wie die Stützkonstruktion gefertigt ist. Eine derartige konstruktive Gestaltung bietet sich vor allem bei beispielsweise geländegängigen Fahrzeugen an, die im Frontbereich vorzugsweise eine aus Stahl oder zumindest einem Metall gefertigte Stützkonstruktion aufweisen. Bei einem Frontaufprall stößt das aufprallende Fahrzeug somit direkt auf die Stoßfängerblende, die vorteilhafterweise Bestandteil des Unterfahrschutzes ist.

Bei einer alternativen Ausführungsform ist die Stoßfängerblende als separates Bauteil bzw. zumindest als Blende ausgeführt, welches/welche der an der Stützkonstruktion befestigbar ist. Zur Befestigung der Stoßfängerblende verfügt die Stützkonstruktion vorzugsweise über Aufnahmeelemente, an denen die Stoßfängerblende anzubringen ist. Besonders geeignet ist in diesem Zusammenhang die Verwendung von Klemmelementen, auf die die Stoßfängerblende bei der Montage lediglich aufzuschieben und durch einrasten entsprechender Gegenstücke in den Klemmelementen sicher zu befestigen ist. Selbstverständlich ist es auch denkbar, die Aufnahmeelemente alternativ oder zusätzlich als Gewinde auszuführen, so dass die Stoßfängerblende mit Hilfe wenigstens einer Verschraubung an der Stützkonstruktion befestigbar ist.

Vorteilhafterweise weist die Stoßfängerblende teilweise einen Kunststoff auf, so dass sie zum einen bei einem Aufprall verformbar und zum anderen bei der Montage oder einem Austausch verhältnismäßig leicht zu handhaben ist.

In einer weiteren speziellen Ausführungsform des erfindungsgemäßen Stoßfängers, weist die Stützkonstruktion wenigstens zwei Stützelemente auf, die vorzugsweise durch Schweißverbindungen miteinander verbunden sind. Die Stützelemente sind vorzugsweise als Streben ausgebildet, die mit dem Unterfahrschutzelement eine rahmenförmige Stützkonstruktion bildet, angeordnet sind. Bei einer besonderen Gestaltung der Stützkonstruktion ist ferner vorgesehen, das wenigstens eine Unterfahrschutzelement als unteres Tragelement auszuführen, an dem wenigstens zwei, nahezu senkrecht zum Unterfahrschutzelement verlaufende Streben befestigt werden, die wiederum durch eine im wesentlichen parallel zum Unterfahrschutzelement verlaufenden oberen Querträger verbunden sind. Auf diese Weise bilden das wenigstens eine Unterfahrschutzelement, die wenigstens zwei in vertikaler Richtung verlaufenden Streben und der obere Querträger eine Rahmenkonstruktion, die vorzugsweise durch zusätzliche Streben verstärkbar ist. Vorteilhafterweise werden diese zusätzlichen Streben ebenfalls sowohl an dem zumindest einen Unterfahrschutzelement und dem oberen Querträger befestigt, so dass sie im Wesentlichen in vertikaler Richtung verlaufen.

Bei einer besonderen Ausführungsform ist die rahmenförmige Stützkonstruktion durch einen weiteren Querträger unterhalb des oberen Querträgers ausgestaltet und zwar so, dass in dem Freiraum zwischen den Trägern eine Beleuchtungseinheit einbaubar ist. Weiterhin muss genügend Freiraum für die Zuführleitungen und ggf. auch für die Bewegseinrichtungen bzw. -antriebe für die Beleuchtungseinheit angeboten sein. Mit der vorbeschriebenen Befestigung von Funktionselementen, insbesondere von Scheinwerfern, an der sich ebenfalls durch eine hohe Steifigkeit auszeichnenden Stützkonstruktion wird darüber hinaus sichergestellt, dass die Scheinwerfer auch bei der Fahrt über schlechten, unebenen Untergrund stabil gehalten sind und so das so genannte Scheinwerferflattern zuverlässig vermieden wird.

Weiterhin ist es denkbar, die rahmenförmige Stützkonstruktion durch ein Blechpressteil zumindest teilweise zu ersetzen. Aus Gründen der Festigkeit und des Anbaues von Teilen müsste aber zumindest die äußere Vertikalstrebe je Fahrzeugseite erhalten bleiben.

In einer weiteren besonderen Ausführungsform des erfindungsgemäßen Stoßfängers sind an dem Stoßfängerträger Rahmenbefestigungselemente vorgesehen, mit denen der Stoßfängerträger am Rahmenfrontend des Kraftfahrzeugs befestigbar ist. Der Stoßfängerträger lässt sich auf Grund der vorgenannten Rahmenbefestigungselemente auf einfache Weise als kompaktes, einstückiges Frontmodul am Fahrzeugrahmen befestigen. Vorzugsweise werden darüber hinaus vor der Montage des Stoßfängerträgers am Fahrzeugrahmen alle für die Integration vorgesehenen Anbauteile und/oder Funktionselemente am Stoßfängerträger befestigt. Der Stoßfängerträger ist somit zum einen als Montagevorrichtung einzusetzen und zum anderen sind auf vorteilhafte Weise Justier- und/oder Handhabungshilfen am Stoßfängerträger vorsehbar.

Eine spezielle Ausführungsform sieht weiterhin vor, dass der Stoßfängerträger über eine Aufnahmestruktur verfügt, an der zumindest eine Karosserieverkleidung befestigbar ist. Derartige Karosserieverkleidungen sind vorzugsweise aus Kunststoff gefertigt und sorgen für einen optisch einwandfreien Eindruck des Fahrzeugs. Indem sie bspw. auch den Strömungswiderstand des Fahrzeugs herabsetzen und hinter den Verkleidungen angeordnete Elemente vor Beschädigungen schützen, erfüllen derartige Verkleidungen aber selbstverständlich auch funktionelle Aufgaben. Zur Befestigung der Karosserieverkleidungen am Stoßfängerträger sind sowohl Klemmverbindungen als auch Schraub- oder Nietverbindungen einsetzbar.

Der erfindungsgemäße Stoßfänger eignet sich insbesondere für den Einsatz in Nutzfahrzeugen und besonders vorteilhaft für den Einbau in Lastkraftwagen mit einem zulässigen Gesamtgewicht ab etwa 6000 kg. Nichts desto trotz ist der vorbeschriebene Stoßfänger ebenfalls für den Einsatz in Bussen, Kleintransportern und auch Personenkraftwagen geeignet.

Im Nachfolgenden wird die Erfindung an Hand eines Ausführungsbeispiels ohne Beschränkung des allgemeinen Erfindungsgedankens unter Bezugnahme auf die Zeichnung näher erläutert. Die Zeichnung zeigt:
- Fig. 1: Erfindungsgemäß ausgeführter Stoßfänger

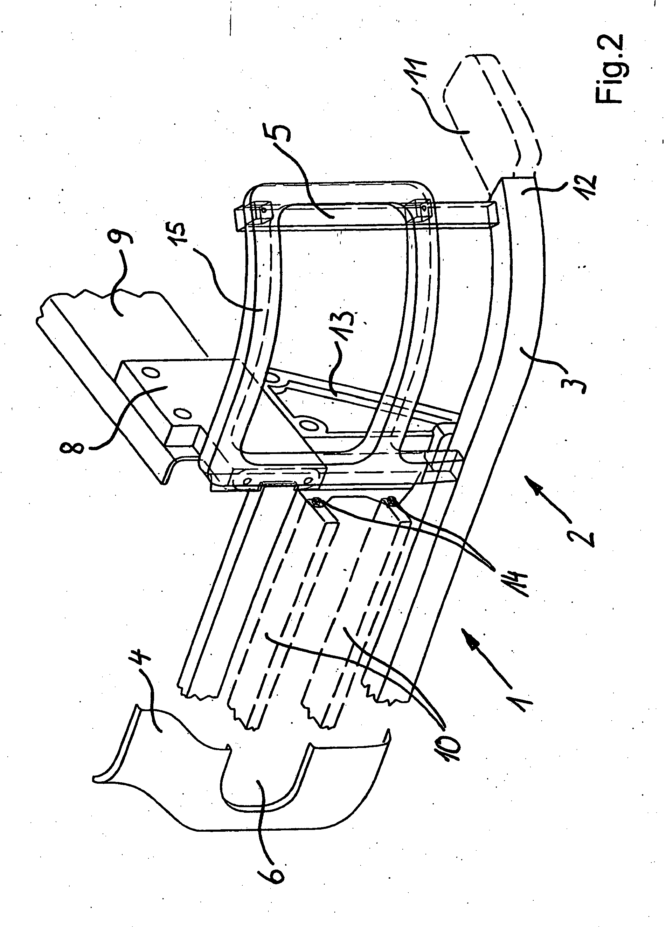

- Fig. 2: Erfindungsgemäß ausgeführter Stoßfänger mit einem Blechpressteil

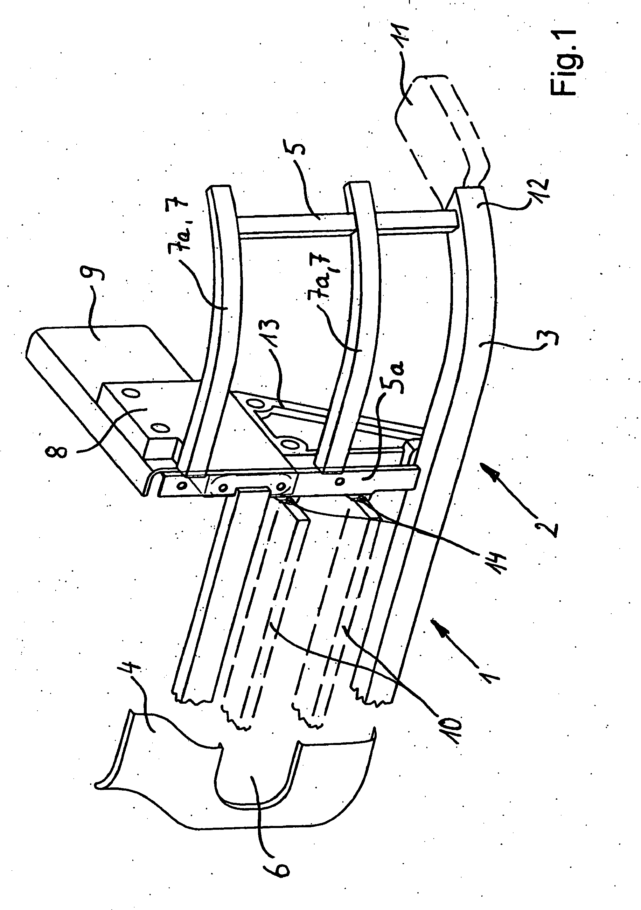

Die Figur 1 zeigt eine Stoßfängereinheit 1 eines Frontlenker-Lastkraftwagens, die über einen als rahmenförmige Stützkonstruktion ausgeführten Stoßfängerträger 2 verfügt, der ein Unterfahrschutzelement 3 und eine Stoßfängerblende 4 aus Kunststoff aufweist. In der Stoßfängerblende 4, die mit Hilfe von Befestigungselementen an dem Stoßfängerträger 2 befestigbar ist, ist ein Scheinwerferausschnitt 6 vorgesehen, in den im Einbauzustand ein am Stoßfängerträger 2 befestigter Scheinwerfer (nicht dargestellt) hineinragt. Der Scheinwerfer wird derart in einem Freiraum des in Art einer Rahmenkonstruktion ausgebildeten Stoßfängerträgers 2 befestigt, dass der Scheinwerfer zum Lampenwechsel durch den Scheinwerferausschnitt 6 geschwenkt werden kann, so dass der Scheinwerfer von hinten zugänglich ist.

Es ist aber auch denkbar, dass der Scheinwerfer fest bzw. nicht schwankbar ausgebildet ist. Hier muss für den Lampenwechsel das Fahrerhaus gekippt werden.

Das Unterfahrschutzelement 3 ist im unteren Bereich des Stoßfängerträgers 2 vorgesehen und über senkrecht zum Unterfahrschutzelement 3 angeordnete Streben 5, 5a mit zwei oberen Querträgern 7a verbunden. Das Unterfahrschutzelement 3, die Streben 5, 5a und die oberen Querträger 7a sind vorzugsweise mittels Schweißverbindungen miteinander verbunden. Die oberen, in diesem Fall im Mittelteil unterbrochenen Querträger 7 verfügen in Vorwärtsfahrtrichtung des Fahrzeugs gesehen über zwei linken 7a und zwei rechte 7b Querträgerteile. Die linken und die rechten Querträgerteile 7a, 7b, von denen in der Figur lediglich die linken Teile 7a dargestellt sind, sind jeweils mit einem Rahmenbefestigungselement 8 verbunden, das wiederum jeweils über eine Schraubverbindung mit einem Rahmenlängsträger 9 des Lastkraftwagens verschraubt ist.

Weiterhin ist ein Deformationselement 13 angeordnet, das im unteren Bereich mit dem Unterfahrschutzelement 3 und im oberen Bereich mit dem Rahmenbefestigungselment 8 verbunden ist und bei einem Frotalunfall als Kraftaufnahmeelement 13 und Deformationselement 13 dient.

Der als Stützkonstruktion ausgeführte Stoßfängerträger 2 ist derart gestaltet, dass verschiedene Anbauteile und Funktionselemente an der Stützkonstruktion befestigbar sind. So ist im mittleren Teil des Stoßfängerträger 2 ein Auftritt 10 oder mehrere Auftritte 10 vorgesehen, auf die eine Person während der Reinigung der Frontscheibe treten kann. Die genannten Auftritte 10 sind beispielsweise über eine Lagerung 14 schwenkbar oder herausklappbar mit der Strebe 5a verbunden. Des Weiteren sind an den seitlichen leicht gegen die Vorwärts- fahrtrichtung des Lastkraftwagens gebogenen Enden 12 des Unterfahrschutzelementes 3 jeweils eine Trittstufe 11 vorgesehen, die die untersten Stufen des Fahrzeugeinstiegs bilden.

Der in der Figur dargestellte ausgeführte Stoßfängerträger 2 ermöglicht das Vorsehen eines Unterfahrschutzelementes 3, ohne dass hierfür der für Anbauteile und/oder Funktionselemente des Kraftfahrzeugs benötigte Platz verloren geht. Vielmehr wird durch die beschriebene Gestaltung zusätzlicher Einbauraum, insbesondere in den Freiräumen der Stützkonstruktion gewonnen. Darüber hinaus werden sowohl ein Kosten- als auch ein Gewichtsvorteil gegenüber Systemen erzielt, die zusätzlich zum Stoßfänger über ein separates Unterfahrschutzelement verfügen. Nicht zuletzt ist auch zu beachten, dass ein einstückig ausgeführtes Bauteil, wie es der erfindungsgemäße Stoßfängerträger mit integriertem Unterfahrschutzelement darstellt, auch hinsichtlich seiner Recyclingfähigkeit Vorteile aufweist.

Die Stützkonstruktion 5, 5a, 7, 7a kann, bei entsprechender Stückzahl, auch ersetzt werden durch ein Blechpressteil 15 oder Tiefziehteil 15. In diesem Fall benötigt man von der Stützkonstruktion nur noch die Strebe 5.

Das Blech- oder Tiefziehteil 15 bildet dann mit dem Unterfahrschutzelement 3 und der Strebe 5 den Stossfängerträger 2.

## Patentansprüche

1. Stoßfängereinheit (1) für einen Frontbereich eines Kraftfahrzeugs, mit
a) einem Stoßfängerträger (2),
a1) der an einem Rahmen (9) und/oder an einem Rahmenanbauteil (8) des Kraftfahrzeugs befestigbar ist, und
a2) der zumindest ein Unterfahrschutzelement (3) sowie wenigstens eine Stoßfängerblende (4) aufweist,
**dadurch gekennzeichnet,**
b) **dass** der Stoßfängerträger (2) als rahmenförmige Stützkonstruktion (3, 5, 7, 7a, 7b) ausgebildet ist,
c) **dass** an der rahmenförmigen Stützkonstruktion (3, 5, 7, 7a, 7b) wenigstens ein Anbautell (10, 11) und ein Funktionselement des Kraftfahrzeugs befestigbar ist, und
d) **dass** das zumindest eine Unterfahrschutzelement (3) Teil der rahmenförmigen Stützkonstruktion (3, 5, 5a, 7, 7a, 7b, 15) ist, und
e) **dass** zwei im Wesentlichen parallel zu dem Unterfahrschutzelement (3) verlaufende obere Querträger (7) Teil der rahmenförmigen Stützkonstruktion (3, 5, 7, 7a, 7b) sind,
f) **dass** mindestens zwei Streben (5) Teil der rahmenförmigen Stützkonstruktion (3, 6, 7, 7a, 7b) sind, wobei die Streben (5) in vertikaler Richtung verlaufen und sowohl an den oberen Querträgern (7) als auch an dem Unterfahrschutzelement (3) befestigt sind, und
g) **dass** in einen Freiraum zwischen den oberen Querträgern (7a, 7) eine Beleuchtungseinheit einbaubar ist.

2. Stoßfängereinheit (1) nach Anspruch 1, **dadurch gekennzeichnet, dass** die Stoßfängerblende (4) des an dem Rahmen und/oder an dem Rahmenanbauteil des Kraftfahrzeugs befestigten Stoßfängerträgers (2) eine von außen sichtbare Fläche aufweist.

3. Stoßfängereinheit (1) nach Anspruch 1, **dadurch gekennzeichnet, dass** der Stossfängerträger (2) über Aufnahmeelemente verfügt, an denen die Stoßfängerblende (4) befestigbar ist.

4. Stoßfängereinheit (1) nach einem der Ansprüche 1 bis 3, **dadurch gekennzeichnet, dass** die Stoßfängerblende (4) zumindest teilweise einen Kunststoff aufweist.

5. Stoßfängereinheit (1) nach einem der Ansprüche 1 bis 4, **dadurch gekennzeichnet, dass** der Stoßfängerträger (2) Stützelemente (5, 7, 7a, 7b) aufweist, die durch Schweißverbindungen mit einander verbunden sind.

6. Stoßfängereinheit (1) nach einem der Ansprüche 1 bis 5, **dadurch gekennzeichnet, dass** der Stoßfängerträger (2) Befestigungsstrukturen aufweist, an denen wenigstens ein Fahrerhausbefestigungselement als Anbauteil befestigbar ist.

7. Stoßfängereinheit (1) nach einem der Ansprüche 1 bis 6, **dadurch gekennzeichnet, dass** der Stoßfängerträger (2) derart gestaltet ist, dass ein Kühler und/oder ein Kühleranbauteil an dem Stossfängerträger (2) befestigbar ist.

8. Stoßfängereinheit (1) nach einem der Ansprüche 1 bis 7, **dadurch gekennzeichnet, dass** an dem Stoßfängerträger (2) wenigstens eine Beleuchtungs- und/oder Scheinwerfereinrichtung befestigbar ist.

9. Stoßfängereinheit (1) nach einem der Ansprüche 1 bis 8, **dadurch gekennzeichnet, dass** an dem Stoßfängerträger (2) Rahmenbefestigungselemente (8) vorgesehen sind, mit denen der Stoßfängerträger (2) am Rahmenfrontend (9) des Kraftfahrzeugs befestigbar ist.

10. Stoßfängereinheit (1) nach einem der Ansprüche 1 bis 9, **dadurch gekennzeichnet, dass** die Stützkonstruktion zumindest teilweise durch eine Blechpressteilkonstruktion (15) ersetzt ist.

11. Stoßfängereinheit (1) nach einem der Ansprüche 1 bis 10, **dadurch gekennzeichnet, dass** der Stoßfängerträger (2) über eine Aufnahmestruktur verfügt, an der zumindest eine Karosserleverkleidung (4) befestigbar ist.

12. Verwendung der Stoßfängereinheit (1) nach einem der Ansprüche 1 bis 11 in einem Lastkraftwagen mit einem zulässigen Gesamtgewicht ab etwa 6000 kg.

## Claims

1. Bumper unit (1) for a front region of a motor vehicle, having
a) a bumper carrier (2)
a1) which can be fastened to a frame (9) and/or to a frame attachment part (8) of the motor vehicle, and
a2) which has at least one underride guard element (3) and at least one bumper trim panel (4),
**characterized**
b) **in that** the bumper carrier (2) is in the form of a frame-like support structure (3, 5, 7, 7a, 7b),
c) **in that** at least one attachment part (10, 11) and one functional element of the motor vehicle can be fastened to the frame-like support structure (3, 5, 7, 7a, 7b), and
d) **in that** the at least one underride guard element (3) is part of the frame-like support structure (3, 5, 5a, 7, 7a, 7b, 15), and
e) **in that** two upper transverse beams (7) that extend substantially parallel to the underride guard element (3) are part of the frame-like support structure (3, 5, 7, 7a, 7b),
f) **in that** at least two struts (5) are part of the frame-like support structure (3, 5, 7, 7a, 7b), wherein the struts (5) extend in a vertical direction and are fastened both to the upper transverse beams (7) and to the underride guard element (3), and
g) **in that** an illumination unit can be installed in a free space between the upper transverse beams (7a, 7).

2. Bumper unit (1) according to Claim 1, **characterized in that** the bumper trim panel (4) of the bumper carrier (2) that is fastened to the frame and/or to the frame attachment part of the motor vehicle has a surface that is visible from the outside.

3. Bumper unit (1) according to Claim 1, **characterized in that** the bumper carrier (2) has receiving elements to which the bumper trim panel (4) can be fastened.

4. Bumper unit (1) according to one of Claims 1 to 3, **characterized in that** the bumper trim panel (4) has, at least in parts, a plastic.

5. Bumper unit (1) according to one of Claims 1 to 4, **characterized in that** the bumper carrier (2) has support elements (5, 7, 7a, 7b) which are connected to one another by welded connections.

6. Bumper unit (1) according to one of Claims 1 to 5, **characterized in that** the bumper carrier (2) has fastening structures to which at least one driver's cab fastening element, as an attachment part, can be fastened.

7. Bumper unit (1) according to one of Claims 1 to 6, **characterized in that** the bumper carrier (2) is designed such that a radiator and/or a radiator attachment part can be fastened to the bumper carrier (2).

8. Bumper unit (1) according to one of Claims 1 to 7, **characterized in that** at least one illumination and/or headlamp device can be fastened to the bumper carrier (2).

9. Bumper unit (1) according to one of Claims 1 to 8, **characterized in that**, on the bumper carrier (2), there are provided frame fastening elements (8) by means of which the bumper carrier (2) can be fastened to the frame front end (9) of the motor vehicle.

10. Bumper unit (1) according to one of Claims 1 to 9, **characterized in that** the support structure is replaced at least partially by a sheet-metal pressed part structure (15).

11. Bumper unit (1) according to one of Claims 1 to 10, **characterized in that** the bumper carrier (2) has a receiving structure to which at least one body panelling (4) can be fastened.

12. Use of the bumper unit (1) according to one of Claims 1 to 11 in a heavy goods vehicle with an admissible total weight of above approximately 6000 kg.

## Revendications

1. Unité de pare-chocs (1) pour une partie avant d'un véhicule automobile, comprenant
a) un support de pare-chocs (2),
a1) qui peut être fixé sur un châssis (9) et/ou sur un composant de châssis (8) du véhicule automobile, et
a2) qui comprend au moins un élément de protection anti-encastrement (3) ainsi qu'au moins un cache de pare-chocs (4), **caractérisée**
b) **en ce que** le support de pare-chocs (2) est réalisé sous forme de structure de support en forme de châssis (3, 5, 7, 7a, 7b),
c) **en ce qu'**au moins une pièce rapportée (10, 11) et un élément fonctionnel du véhicule automobile peuvent être fixés sur la structure de support en forme de châssis (3, 5, 7, 7a, 7b), et
d) **en ce qu'**au moins un élément de protection anti-encastrement (3) fait partie de la structure de support en forme de châssis (3, 5, 5a, 7, 7a, 7b, 15), et
e) **en ce que** deux traverses supérieures (7) s'étendant essentiellement parallèlement à l'élément de protection anti-encastrement (3) font partie de la structure de support en forme de châssis (3, 5, 7, 7a, 7b),
f) **en ce qu'**au moins deux montants (5) font partie de la structure de support en forme de châssis (3, 5, 7, 7a, 7b), les montants (5) s'étendant dans la direction verticale et étant fixés non seulement aux traverses supérieures (7) mais aussi à l'élément de protection anti-encastrement (3), et
g) **en ce qu'**une unité d'éclairage peut être installée dans un espace libre entre les traverses supérieures (7a, 7).

2. Unité de pare-chocs (1) selon la revendication 1, **caractérisée en ce que** le cache de pare-chocs (4) du support de pare-chocs (2) fixé au châssis et/ou au composant de châssis du véhicule automobile comprend une surface visible depuis l'extérieur.

3. Unité de pare-chocs (1) selon la revendication 1, **caractérisée en ce que** le support de pare-chocs (2) possède des éléments de réception sur lesquels le cache de pare-chocs (4) peut être fixé.

4. Unité de pare-chocs (1) selon l'une quelconque des revendications 1 à 3, **caractérisée en ce que** le cache de pare-chocs (4) comprend au moins partiellement un plastique.

5. Unité de pare-chocs (1) selon l'une quelconque des revendications 1 à 4, **caractérisée en ce que** le support de pare-chocs (2) comprend des éléments de support (5, 7, 7a, 7b) qui sont reliés les uns aux autres par des joints soudés.

6. Unité de pare-chocs (1) selon l'une quelconque des revendications 1 à 5, **caractérisée en ce que** le support de pare-chocs (2) comprend des structures de fixation sur lesquelles au moins un élément de fixation de cabine de conducteur peut être fixé en tant que pièce rapportée.

7. Unité de pare-chocs (1) selon l'une quelconque des revendications 1 à 6, **caractérisée en ce que** le support de pare-chocs (2) est configuré de telle sorte qu'un radiateur et/ou une pièce rapportée de radiateur peuvent être fixés sur le support de pare-chocs (2).

8. Unité de pare-chocs (1) selon l'une quelconque des revendications 1 à 7, **caractérisée en ce qu'**au moins un dispositif d'éclairage et/ou de phare peut être fixé sur le support de pare-chocs (2).

9. Unité de pare-chocs (1) selon l'une quelconque des revendications 1 à 8, **caractérisée en ce que** des éléments de fixation de châssis (8) sont prévus sur le support de pare-chocs (2), à l'aide desquels le support de pare-chocs (2) peut être fixé à l'extrémité avant de châssis (9) du véhicule automobile.

10. Unité de pare-chocs (1) selon l'une quelconque des revendications 1 à 9, **caractérisée en ce que** la structure de support est remplacée au moins partiellement par une structure de pièce emboutie en tôle (15).

11. Unité de pare-chocs (1) selon l'une quelconque des revendications 1 à 10, **caractérisée en ce que** le support de pare-chocs (2) possède une structure de réception sur laquelle au moins un panneau de carrosserie (4) peut être fixé.

12. Utilisation de l'unité de pare-chocs (1) selon l'une quelconque des revendications 1 à 11 dans un poids-lourd présentant un poids total admissible d'approximativement à partir de 6000 kg.
